(19)

Europäisches
Patentamt
European
Patent Office
Office européen
des brevets

(11) **EP 2 637 041 A1**

(12) **EUROPEAN PATENT APPLICATION**
published in accordance with Art. 153(4) EPC

(43) Date of publication:
**11.09.2013 Bulletin 2013/37**

(21) Application number: **10859303.9**

(22) Date of filing: **12.11.2010**

(51) Int Cl.:
***G01S 19/24*** (2010.01)          ***H04W 4/02*** (2009.01)

(86) International application number:
**PCT/KR2010/007988**

(87) International publication number:
**WO 2012/060501 (10.05.2012 Gazette 2012/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2010 KR 20100109106**

(71) Applicants:
 • **Jung, Kan-Mook**
  **Hanam-si, Gyeonggi-do 465-807 (KR)**
 • **Lee, Woo-Sup**
  **Yongin-si, Gyeonggi-do 448-150 (KR)**
 • **Shin, Hee-Tai**
  **Seoul 158-052 (KR)**

(72) Inventors:
 • **Jung, Kan-Mook**
  **Hanam-si, Gyeonggi-do 465-807 (KR)**
 • **Lee, Woo-Sup**
  **Yongin-si, Gyeonggi-do 448-150 (KR)**
 • **Shin, Hee-Tai**
  **Seoul 158-052 (KR)**

(74) Representative: **Franke, Dirk**
 **Franke & Partner Intellectual Property
 Law Firm
 European Patent Attorneys
 Widenmayerstrasse 25
 80538 Munich (DE)**

(54) **SYSTEM AND METHOD FOR ESTIMATING INDOOR LOCATION USING SATELLITE SIGNAL GENERATION DEVICE**

(57)    The present invention relates to a system and a method for estimating a location for freely providing location estimation service to a user owning a satellite signal receiving terminal, such as an existing mobile phone or a navigator, without having to change any hardware or software, even in shadow areas where satellite signals cannot reach easily, such as inside buildings, underground commercial quarters, tunnels, and subways. The system for estimating an indoor location of using a satellite signal generation device of the present invention comprises: a reception antenna for receiving satellite signals; a central control device for calculating and renewing real-time satellite information of all existing satellites, for extracting and synchronizing satellite time from the satellite signal which is received from the reception antenna, and selecting at least four satellite numbers that can be used for estimating the location from the all existing satellites, based on the satellite time information; and at least one satellite signal generation device for being allocated the satellite number from the central control device and generating the satellite signal which corresponds to the allocated satellite number, wherein an environment is provided for a user of an indoors satellite signal receiving terminal to estimate the location of oneself, based on the satellite signal that corresponds to the at least four satellite numbers, which are transmitted from the satellite signal generation device.

**Fig. 2**

## EP 2 637 041 A1

### Description

### Technical Field

The present invention relates generally to a system and method for estimating an indoor location using a satellite signal generation device, and specifically to a system and a method for estimating a location capable of freely providing a location estimation service without changing hardware or software for a user having a satellite signal receiving terminal such as a current cellular phone or a navigation system even in a shaded area which satellite signals may not reach such as inside of a building, an underground shopping arcade, a tunnel, or a subway.

### Background Art

In general, a system for estimating a location is a system for receiving satellite signals from a satellite located at about 19,000 to 25,000 km over the ground and then estimating a location of a receiving terminal using a triangulation method or the like.

Therefore, the system for estimating a location has a limitation in that a location may only be estimated outdoors where satellite signals are directly received. Therefore, since satellite signals are not properly received indoors such as inside of a building, an underground shopping arcade, a tunnel, or a subway, a location estimation service may not be provided.

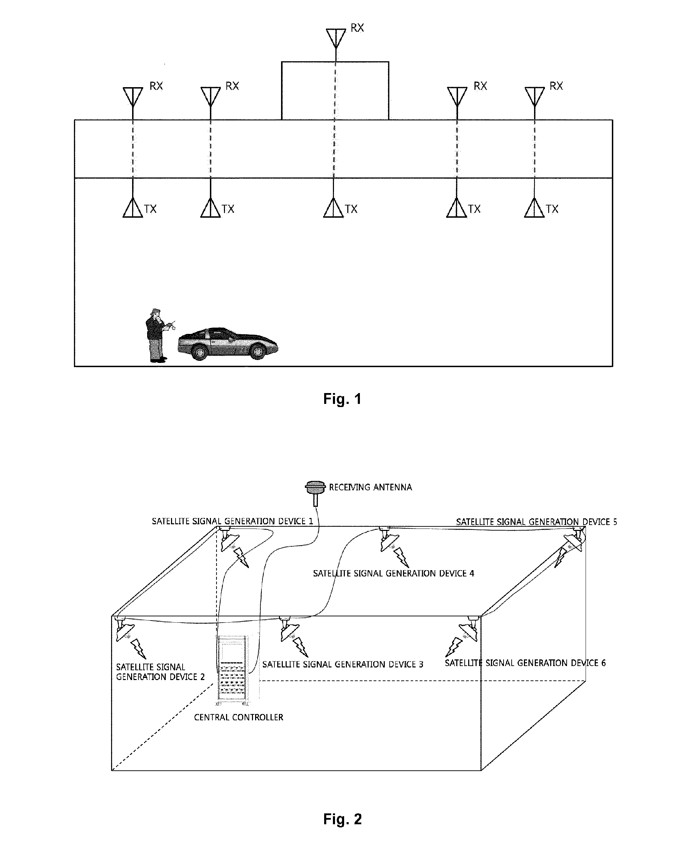

In order to solve the limitation and the problem described above, as illustrated in FIG. 1, a method (hereinafter referred to as the conventional art) for receiving satellite signals on the roof, and then transmitting the received satellite signals indoors has been proposed.

However, the conventional art has problems as follows.

Firstly, a vertical error is caused by recognizing coordinates of retransmission signals received through a transmitting antenna (TX ANT) as coordinates of a receiving antenna (RX ANT) and a distance to the receiving antenna becomes a horizontal error. In order to correct the horizontal error, a plurality of receiving antennas (RX ANT) are required, causing an increase in production and installation costs.

Secondly, a point of a receiving antenna installed outdoors and a point of a transmitting antenna correspondingly installed indoors should be installed in a manner of exactly matching with each other, but due to geographic features installed on the roof, it is substantially difficult to install the plurality of receiving antennas in a manner of exactly matching with the corresponding transmitting antennas.

Thirdly, since a loss rate changes according to an insertion length of a cable illustrated by dotted lines in FIG. 1, electric field strengths at the end terminals of transmitting antennas should be controlled.

Fourthly, according to the installation heights of receiving antennas, different coordinates are received. This greatly influences a vertical error rate.

Fifthly, if RF powers of transmitting antennas are not exactly the same, signals from a transmitting antenna with a high RF power are continuously received by a terminal.

Accordingly, the inventers of the present invention have developed a system capable of providing a location estimation service indoors in an environment the same as outdoors by basically receiving satellite signals having signal structures the same as the satellite signals, extracting satellite time from the satellite signals received from the receiving antenna, selecting at least 4 satellite numbers appropriate for location estimation among all actual satellites based on the satellite time, allocating the selected satellite numbers to a satellite signal generation device, and generating satellite signals corresponding to the corresponding satellite numbers by the satellite signal generation device based on previously calculated real-time satellite information of all actual satellites.

### Detailed Description of the Invention

### Technical Problem

An aspect of the present invention is to build a seamless location estimation system environment in which handover is freely performed between an outdoor location estimation environment and an indoor location estimation environment without changing hardware or software of a user terminal.

In addition, another aspect of the present invention is to reduce the production cost by installing selectively one or more satellite signal generation devices according to the large or small installation area, and transmitting at least one satellite signal from the installed satellite signal generation device, thereby adjusting the installation number of satellite signal generation devices according to the installation area.

In addition, another aspect of the present invention to greatly improve accuracy of location estimation, by selecting satellites not only within visibility but also in an orbit out of visibility range in a condition of a simple program modification of a receiver to use satellite signals of the corresponding satellites for location estimation.

**Technical Solution**

In order to accomplish this object, an aspect of the present invention provides a system for estimating an indoor location using a satellite signal generation device. The system for estimating an indoor location includes a receiving antenna for receiving satellite signals; a central controller for periodically receiving and storing an update of real-time satellite information of all actual satellites, extracting satellite time from the satellite signals received from the receiving antenna for synchronization, and selecting at least 4 satellite numbers available for location estimation among all the actual satellites based on information on the satellite time; and at least one satellite signal generation device receiving satellite numbers allocated by the central controller, and generating satellite signals corresponding to the satellite numbers allocated by the central controller, wherein the system for estimating the indoor location provides an environment that enables an indoor satellite signal receiving terminal user to estimate his or her location based on the satellite signals corresponding to at least 4 satellite numbers transmitted from the satellite signal generation device.

Preferably, the central controller or the satellite signal generation device calculates distances between the actual satellites and the corresponding satellite signal generation devices with respect to the selected satellite numbers based on actual orbit coordinates of the corresponding satellite numbers and previously estimated location coordinates of the corresponding satellite signal generation devices and calculates delay transmission time by dividing the calculated distance by light speed.

More preferably, the satellite signal generation device generates satellite signals corresponding to the selected satellite numbers in a manner of being delayed by the delay transmission time received from the central controller or autonomously calculated.

Most preferably, the satellite signal generation device receives at least four allocated satellite numbers, and generates satellite signals corresponding to the allocated satellite numbers.

Preferably, the central controller selects at least 4 satellite numbers available for location estimation among all actual satellites existing in visibility based on the information on the satellite time.

Preferably, the central controller selects at least one satellite existing in visibility among all the actual satellites and at least 3 satellites existing around within 120 degrees latitude and longitude with respect to the satellite.

Preferably, the kinds of satellites include GPS, Galileo, and GLONASS.

According to another embodiment of the present invention, a method for estimating an indoor location using a satellite signal generation device includes receiving satellite signals by a receiving antenna and transmitting the received satellite signals to a central controller; extracting satellite time from the received satellite signals, and synchronizing the system based on the extracted satellite time; selecting at least 4 satellite numbers available for location estimation among all the actual satellites based on real-time satellite information of all the actual satellites and information on the satellite time and allocating the selected satellite numbers to the satellite signal generation device; calculating distances between the actual satellites and the corresponding satellite signal generation devices with respect to the selected satellite numbers based on actual orbit coordinates of the corresponding satellite numbers and installation location coordinates of the corresponding satellite signal generation devices and calculating delay transmission time by dividing the calculated distance by light speed; generating satellite signals corresponding to the selected satellite numbers in a manner of being delayed by the delay transmission time by the satellite signal generation device; and estimating a location of a indoor satellite signal receiving terminal user based on the satellite signals corresponding to the at least 4 satellite numbers transmitted from the satellite signal generation device.

**Advantageous Effects**

The present invention provides effects as follows.

Firstly, the present invention provides an effect of building a seamless location estimation system environment in which handover is performed between an outdoor location estimation environment and an indoor location estimation environment without changing hardware or software of a user terminal.

Secondly, the present invention provides an effect of reducing the production cost by installing selectively one or more satellite signal generation devices according to the large or small installation area and transmitting at least one satellite signal from the installed satellite signal generation device, thereby adjusting the installation number of satellite signal generation devices according to the installation area.

Thirdly, the present invention provides an effect of greatly improving accuracy of vertical location estimation, by selecting satellites not only within the visibility but also in an orbit out of the visibility in a condition of a simple program modification of a receiver to use satellite signals of the corresponding satellites for location estimation.

**Brief Description of the Drawings**

FIG. 1 is a diagram illustrating an example of a system for estimating an indoor location according to the conventional art;

FIG. 2 is a diagram illustrating a system for estimating an indoor location using a satellite signal generation device according to an embodiment of the present invention;

FIG. 3 is a diagram illustrated for better understanding of a method for selecting satellite numbers in consideration of visibility according to the embodiment of the present invention;

FIG. 4 is a diagram illustrating the visibility of the actual satellite;

FIG. 5 is a diagram illustrating an example in which satellite signal generation devices are installed according to the small and large installation areas; and

FIG. 6 is a diagram illustrating a method for calculating distances between actual satellites and corresponding satellite signal generation devices and calculating delay transmission time.

**Mode for Carrying Out the Invention**

A preferred embodiment of the present invention will be described with reference to the accompanied drawings as follows.

FIG. 2 is a diagram illustrating a configuration of a system for estimating an indoor location according to the present invention.

With reference to FIG. 2, a system for estimating an indoor location using a satellite signal generation device according to the present invention includes a receiving antenna which receives a satellite signal; a central controller, as a central controller that is capable of calculating and updating real-time satellite information of all actual satellites, which extracts satellite time from the satellite signal received from the receiving antenna for synchronization, and selects at least 4 satellite numbers appropriate for location estimation among all the actual satellites based on information on the satellite time; and at least one satellite signal generation device which receives satellite numbers allocated from the central controller and generates satellite signals corresponding to the satellite numbers allocated from the central controller.

The receiving antenna is an antenna installed outdoors so that the satellite signals can be received from actual satellites and performs a function of receiving satellite signals from the actual satellites. It is desirable that the receiving antenna is installed on the roof of a building or the like in which the system for estimating an indoor location according to the present invention is installed.

The central controller periodically receives and stores an update of real-time satellite information (for example, real-time orbit information and the like) of all the actual satellites, for example, currently 32 satellites, extracts satellite time from the satellite signals received from the receiving antenna, and synchronizes the satellite signal generation device. In addition, the central controller selects at least 4 satellite numbers appropriate for location estimation among all the actual satellites based on the satellite time information and the information on the location at which the system according to the present invention is installed. Further, the central controller allocates the selected satellite numbers to the satellite signal generation device and transmits information on the satellite signals of the actual satellites corresponding to the selected satellite numbers to the satellite signal generation device. In this case, the central controller may allocate one satellite number to each of the plurality of installed satellite signal generation devices to generate the corresponding satellite signals, and may allocate at least 4 satellite numbers to one satellite signal generation device to generate the corresponding satellite signals.

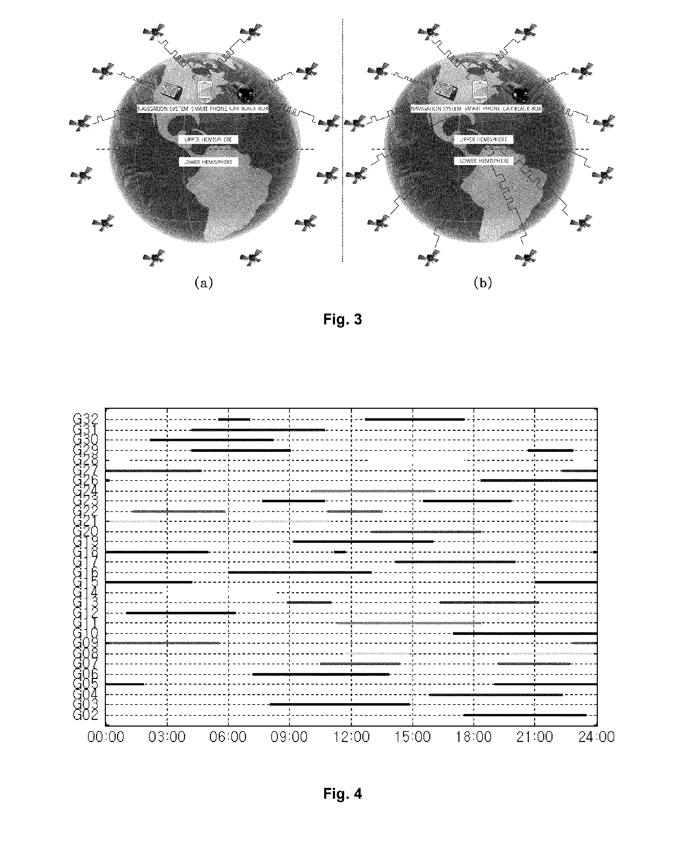

Preferably, as illustrated in FIG. 3(a), among all the actual satellites exiting in the visibility with respect to the current location, at least 4 satellite numbers appropriate for location estimation are selected. Of course, it is obvious that if satellites existing in the visibility change as time passes, the selected satellite numbers may be changed.

For example, with reference to FIG. 4, under the condition of the visibility illustrated in FIG. 4, satellites of numbers 3, 6, 16, and 21 may be selected at 9, but as time passes, for example, at 12, the selected satellites may be changed to satellites of numbers 3, 11, 19, and 24.

More preferably, as illustrated in FIG. 3(b), among all the actual satellites, one satellite existing in the visibility and at least 3 satellites existing around within 120 degrees latitude and longitude with respect to the satellite may be selected. That is, according to the present invention, as described above, not only the satellite existing in the visibility, but also the satellites in orbit out of the visibility may be selected and satellite signals from the corresponding satellites may be used for location estimation. Therefore, the accuracy of the location estimation can be improved drastically.

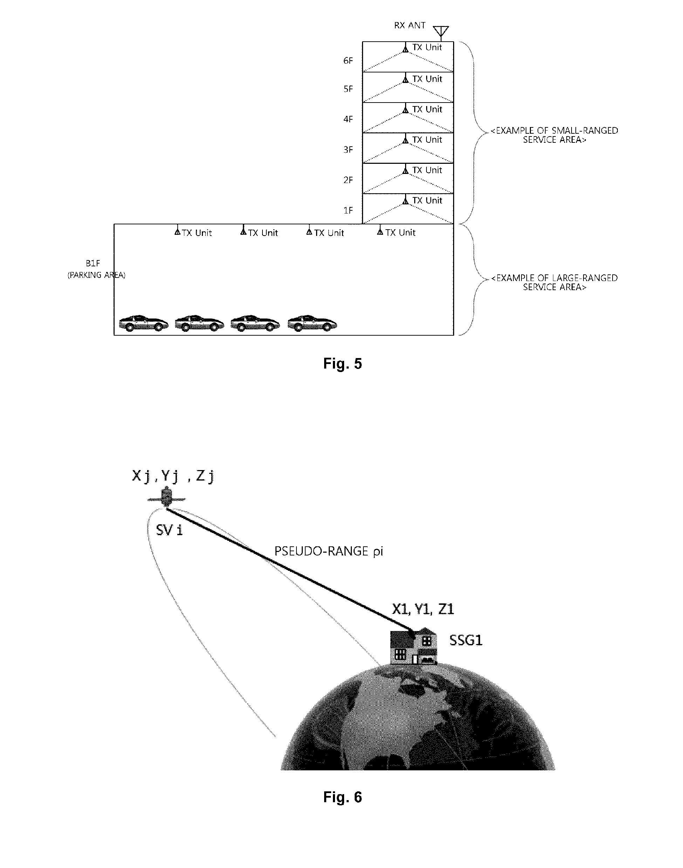

The satellite signal generation device has a function of generating satellite signals corresponding to the satellite numbers allocated from the central controller and one or more satellite signal generation devices can be provided according to the installation area. With reference to FIG. 5, in the case of an underground space with a large service area, a plurality of satellite signal generation devices are installed, and in an overground building with a relatively small installation area, one satellite signal generation device is installed. In this case, it is obvious that one satellite signal generation device may receive at least 4 allocated satellite numbers to generate a plurality of satellite signals regardless of the installation number according to the installation area.

Meanwhile, with respect to the selected satellite numbers, the central controller calculates distances between the actual satellites and the corresponding satellite signal generation devices based on coordinates of substantial orbits of the corresponding satellite numbers and coordinates of the installation location of the satellite signal generation device and transmits delay transmission time calculated by dividing the calculated distance by light speed to the corresponding satellite signal generation device. Of course, according to the circumstances, it is obvious that the satellite signal generation device calculates the delay transmission time, and then transmits the corresponding satellite signals to be delayed by the delay transmission time.

In this manner, the satellite signals should be transmitted in a manner of being delayed by the delay transmission time, because though navigation data of the actual satellite and the satellite signal generation device have the same positional coordinates, the satellite signal generation device exists in a fixed coordinate, so the time consumed for the actual satellite signals to pass through the ionosphere and the troposphere should be compensated with the delay transmission time.

A method for calculating the delay transmission time is schematically described as follows with reference to FIG. 6.

Where the latitude, the longitude, and the altitude of a certain satellite (SVi) selected in the visibility among 32 satellites at any one time are Xj, Yj, and Zj (the j value changes according to time as the satellite moves among the orbit), an apparatus for reproducing a satellite signal of the SVi satellite among the satellite signal generation devices is defined as SSGi, and the coordinates are fixed coordinates of X1, Y1, and Z1, and

the pseudo-range of SVi and SSGi is defined as pi,

$$\rho i = \sqrt{\left(X_j - X_1\right)^2 + \left(Y_j - Y_1\right)^2 + \left(Z_j - Z_1\right)^2}.$$

Finally, the delay transmission time is

$$\rho iT = \rho i/c + Bu.$$

Here, C defines the light speed of $2.99792458 \times 10^8$ m/s, and Bu defines an undetermined value of a delay time compensation value or the like according to the cable length, the user time error, and the service area.

Accordingly, the satellite signal generation device generates satellite signals corresponding to the selected satellite numbers in a manner of being delayed by the delay transmission time received from the central controller so that an error generated by the distance difference between installation locations of the actual satellite and the corresponding satellite signal generation device can be compensated.

The system for estimating a location of the present invention as described above may correctly estimate the location of the satellite signal receiving terminal user located indoors by receiving the satellite signals corresponding to at least 4 satellite numbers transmitted from the satellite signal generation device not only in the outdoor environment but also indoors.

Hereinafter, a description is made of a method for estimating an indoor location using a satellite signal generation device according to an embodiment of the present invention.

A first step is receiving satellite signals by a receiving antenna, and transmitting the received satellite signals to a central controller. This is a step in which a receiving antenna installed outdoors receives satellite signals of actual satellites, and transmits the received satellite signals to the central controller in real time.

A second step is extracting satellite time from the received satellite signals and synchronizes a system based on the extracted satellite time. This is a step in that the central controller extracts satellite time from the satellite signals received from the receiving antenna, and synchronizes the extracted time and the satellite signal generation device.

A third step is selecting at least 4 satellite numbers appropriate for location estimation among all the actual satellites based on the satellite time information and the real-time satellite information of all the satellites, and allocating the selected satellite numbers. This is a step of selecting at least 4 satellite numbers appropriate for location estimation with respect to the current installation location based on the extracted satellite time information and the real-time satellite information of all the actual satellites calculated and updated in advance by the central controller, and allocating the selected satellite numbers to the satellite signal generation device.

A fourth step is calculating the distance between the actual satellite and the corresponding satellite signal generation device with respect to the selected satellite numbers based on coordinates of the actual orbit of the corresponding satellite numbers and coordinates of the installation location of the corresponding satellite signal generation device, and transmitting delay transmission time calculated by dividing the calculated distance by the light speed to the corresponding satellite signal generation device. This is a step of calculating the satellite signal generation delay time of the satellite signal generation device for compensating an error caused by a difference in distances between the actual satellites corresponding to the selected satellite numbers and final end transmitting antennas of the satellite signal generation devices generating the satellite signals corresponding to the selected satellite numbers and errors caused by the size of a service area and a time difference.

A fifth step is generating the satellite signals corresponding to the selected satellite numbers by the satellite signal generation device in a manner of being delayed by the delay transmission time.

A sixth step is estimating a location of an indoor satellite signal receiving terminal user based on the satellite signals corresponding to the at least 4 satellite numbers transmitted from the satellite signal generation device. This is a step of estimating a current location of a user terminal by location estimation based on a satellite signal received from the satellite signal generation device.

The embodiment of the present invention described above and illustrated in the drawings may not be construed to limit the technical idea of the present invention. Especially, the satellite should be understood as a comprehensive concept including a GPS satellite currently widely used in the country and also Galileo and GLONASS used in foreign countries. Meanwhile, the protection scope of the present invention is limited by the contents described in the claims, and it is possible to change and modify the technical ideas of the present invention into various forms by those having ordinary skill in the art to which said subject matter pertains. Therefore, the changes and modifications belong to a protection scope of the present invention as long as the changes and modifications are obvious to those having ordinary skill in the art.

**Claims**

1. A system for estimating an indoor location using a satellite signal generation device, the system comprising:

   a receiving antenna for receiving satellite signals;
   a central controller for periodically receiving and storing an update of real-time satellite information of all actual satellites, extracting satellite time from the satellite signals received from the receiving antenna, and selecting at least 4 satellite numbers available for location estimation among all the actual satellites based on information on the satellite time; and
   at least one satellite signal generation device receiving satellite numbers allocated by the central controller, and generating satellite signals corresponding to the satellite numbers allocated by the central controller,
   wherein the system provides an environment that enables an indoor satellite signal receiving terminal user to estimate his or her location based on the satellite signals corresponding to the at least 4 satellite numbers transmitted from the satellite signal generation device.

2. The system according to claim 1, wherein the central controller or the satellite signal generation device calculates distances between the actual satellites and the corresponding satellite signal generation devices with respect to the selected satellite numbers based on actual orbit coordinates of the corresponding satellite numbers and previously estimated location coordinates of the corresponding satellite signal generation devices and calculates delay transmission time by dividing the calculated distance by light speed.

3. The system according to claim 2, wherein the satellite signal generation device generates satellite signals corresponding to the selected satellite numbers in a manner of being delayed by the delay transmission time received from the central controller or autonomously calculated.

4. The system according to claim 1, wherein the satellite signal generation device receives at least four allocated satellite numbers, and generates satellite signals corresponding to the allocated satellite numbers.

5. The system according to claim 1, wherein the central controller selects at least 4 satellite numbers available for location estimation among all actual satellites existing in visibility based on the information on the satellite time.

6. The system according to claim 1, wherein the central controller selects at least one satellite existing in visibility among all the actual satellites and at least 3 satellites existing around within 120 degrees latitude and longitude with respect to the satellite.

7. The system according to claim 1, wherein the kinds of satellites comprise GPS, Galileo, and GLONASS.

8. A method for estimating an indoor location using a satellite signal generation device, the method comprising:

   receiving satellite signals by a receiving antenna and transmitting the received satellite signals to a central controller;
   extracting satellite time from the received satellite signals, and synchronizing the system based on the extracted satellite time;
   selecting at least 4 satellite numbers available for location estimation among all the actual satellites based on real-time satellite information of all the actual satellites and information on the satellite time and allocating the selected satellite numbers to the satellite signal generation device;
   calculating distances between the actual satellites and the corresponding satellite signal generation devices with respect to the selected satellite numbers based on actual orbit coordinates of the corresponding satellite numbers and installation location coordinates of the corresponding satellite signal generation devices and calculating delay transmission time by dividing the calculated distance by light speed;
   generating satellite signals corresponding to the selected satellite numbers in a manner of being delayed by the delay transmission time by the satellite signal generation device; and
   estimating a location of an indoor satellite signal receiving terminal user based on the satellite signals corresponding to the at least 4 satellite numbers transmitted from the satellite signal generation device.

RX

RX RX RX RX

TX TX TX TX TX

**Fig. 1**

RECEIVING ANTENNA

SATELLITE SIGNAL GENERATION DEVICE 1 SATELLITE SIGNAL GENERATION DEVICE 5

SATELLITE SIGNAL GENERATION DEVICE 4

SATELLITE SIGNAL
GENERATION DEVICE 2 SATELLITE SIGNAL GENERATION DEVICE 3 SATELLITE SIGNAL GENERATION DEVICE 6

CENTRAL CONTROLLER

**Fig. 2**

(a)                                    (b)

**Fig. 3**

**Fig. 4**

**Fig. 5**

$Xj, Yj, Zj$

SV i

PSEUDO-RANGE ρi

X1, Y1, Z1

SSG1

**Fig. 6**

| INTERNATIONAL SEARCH REPORT | International application No. |
|---|---|
| | **PCT/KR2010/007988** |

**A.    CLASSIFICATION OF SUBJECT MATTER**

***G01S 19/24(2010.01)i, H04W 4/02(2009.01)i***

According to International Patent Classification (IPC) or to both national classification and IPC

**B.    FIELDS SEARCHED**

Minimum documentation searched (classification system followed by classification symbols)
G01S 19/24; G01S 1/02; G01S 19/11

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: "indoor, position, measuring, virtual*, satellite"

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2008-0060502 A (KONKUK UNIVERSITY INDUSTRIAL COOPERATION CORP.) 02 July 2008<br>Abstract, claims 1, 2, figures 1, 2 | 1,4,7,8 |
| Y | KR 10-2000-0005191 A (DISCORISION ASSOCIATIES) 25 January 2000<br>Abstract, claim 1, figures 2 to 11 | 1,4,7,8 |
| A | KR 10-2000-0013331 A (KOREA TELECOM) 06 March 2000<br>Abstract, figure 1 | 1-8 |
| A | KR 10-2010-0076340 A (NINETY SYSTEM CO., LTD.) 06 July 2010<br>Abstract, claim 1, figure 1 | 1-8 |

☐  Further documents are listed in the continuation of Box C.      ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 OCTOBER 2011 (20.10.2011) | **21 OCTOBER 2011 (21.10.2011)** |

| Name and mailing address of the ISA/KR | Authorized officer |
|---|---|
| Korean Intellectual Property Office<br>Government Complex-Daejeon, 139 Seonsa-ro, Daejeon 302-701, Republic of Korea<br>Facsimile No.  82-42-472-7140 | Telephone No. |

Form PCT/ISA/210 (second sheet) (July 2009)

INTERNATIONAL SEARCH REPORT
Information on patent family members

International application No.

**PCT/KR2010/007988**

| Patent document cited in search report | Publication date | Patent family member | Publication date |
|---|---|---|---|
| KR 10-2008-0060502 A | 02.07.2008 | NONE | |
| KR 10-2000-0005191 A | 25.01.2000 | AU 1997-18478 B2 | 09.12.1999 |
| | | AU 1997-18478 C | 29.10.1997 |
| | | CA 2250900 A1 | 16.10.1997 |
| | | CA 2250900 C | 09.09.2003 |
| | | CN 1115569 C | 23.07.2003 |
| | | CN 1253628 A | 17.05.2000 |
| | | CN 1253628 C0 | 17.05.2000 |
| | | EP 0891561 A1 | 20.01.1999 |
| | | JP 03-421790 B2 | 25.04.2003 |
| | | JP 2001-507443 A | 05.06.2001 |
| | | US 05815114A A | 29.09.1998 |
| | | US 05952958A A | 14.09.1999 |
| | | WO 97-38326 A1 | 16.10.1997 |
| KR 10-2000-0013331 A | 06.03.2000 | NONE | |
| KR 10-2010-0076340 A | 06.07.2010 | NONE | |

Form PCT/ISA/210 (patent family annex) (July 2009)